# EUROPEAN PATENT APPLICATION

(11) **EP 2 357 820 A1**
(43) Date of publication of application: **17.08.2011**
(21) Application number: 10305131.4
(22) Date of filing: 08.02.2010
(51) Int. Cl.: H04N 7/173, H04N 5/50, H04N 5/44, H04N 7/24

(54) **System and method for signaling programs from different Transport Streams**

(71) Applicant: Thomson Licensing, 92130 Issy-les-Moulineaux (FR)
(72) Inventor: Henry, Jean-Baptiste, F-92443 Issy-les-Moulineaux (FR); Jumpertz, Jean-Luc, F-92443 Issy-les-Moulineaux (FR)
(74) Representative: Ruellan-Lemonnier, Brigitte

(57) **Abstract**

The present invention concerns an audio-video decoder (4) comprising a program selector (26) for selecting a program; and a Program Map Table analyzer (28) for, on reception of a Program Map Table corresponding to a first Transport Stream comprising information on a first program being carried in the first Transport Stream and a pointer to a second program being carried in a second Transport Stream, configuring the program selector so that it connects to the first Transport Stream and to the second Transport Stream for receiving the first program and the second program.

## Description

### FIELD OF THE INVENTION

The present invention relates generally to audio-video distribution and in particular to a method for signaling components of an audio-video content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the domain of digital television, it is known in the art to use a network such as an Internet network to offer a plurality of video contents each having a specific multimedia stream. Typically, these contents are broadcast in the Internet network by a multimedia stream that a user can receive as it is being transmitted in the Internet network.

Video distribution through broadband networks uses standard compression systems such as MPEG-2 (Motion Pictures Expert Group) or JVT/H.264/MPEG AVC. MPEG standards define the group of pictures (GoP). The GoP defines successive pictures sequence I, P, B. These pictures are defined in MPEG standards. The I picture is encoded without any reference to the other pictures. The P picture refers to the previous I or P pictures. The B picture refers to the previous and following I or P pictures. When a receiver receives a new program, it waits for the reception of an I picture to start decoding the program. A delay appears between the reception of the stream and the rendering of the stream on a video screen. Mechanisms used to reduce the digital television bandwidth use less and less I pictures. The decoder requires then more time to find and decode the I picture. This can take up to half a second. Moreover, with television transport over the Internet Protocol networks, an additional buffer is needed at the decoder to compensate the network delivery unreliability. This increases the time between the reception of the program and the transmission of the television stream to the decoder. It can require more than two seconds between the reception and the rendering of the new program picture on the screen. This also increases the channel switching time.

Some technologies have appeared to decrease this channel switching time. WO2005112465A1 from Thomson Licensing SA describes additional streams that are quickly decoded for channel switching, such as rapid I picture finding. EP1523190 from Microsoft describes a unicast burst push method to fill the decoder.

ISO IEC 13818-1 standard, on "Information Technology, Generic coding of moving pictures and associated audio information: Systems, Second edition 2000-12-01", noted ISO IEC 13818-1 hereinafter, specifies the MPEG Transport Stream. The Transport Stream, noted TS hereinafter, combines one or more programs with one or more independent time bases into a single stream. To connect to a program, a receiver first looks for a Program Association Table (PAT). The MPEG2 PAT is defined in ISO IEC 13818-1, chapter 2.4.4.3. The PAT provides the correspondence between a program number and the PID value of the Transport Stream packets which carry the program definition; the program number being the numeric label associated with a program. The PAT is providing pointers to Program Map Tables (PMT). There is one PMT for each program within the TS. The pointer is the PID of the PMT, program_map_PID field, which is not a fixed well known value. The MPEG2 PMT is defined in ISO IEC 13818-1, chapter 2.4.4.8. The PMT is providing pointers to the components, also called Elementary Streams (ES), making up the program. For each component, the PID component is provided, this is the elementary_PID field, and the Stream Type value indicates the kind of component it is: video, audio, etc. The Stream Type values are defined in ISO IEC 13818-1, chapter 2.4.4.10. The receiver finally knows where to get which component for the program, and can start routing the ES to the correct decoder in order to be able to render it.

Having to receive a program encoded into plain-resolution and the same program encoded into low-resolution, the receiver may be conducted to connect to two different Transport Streams, a first one transporting the plain-resolution program and a second one transporting the low-resolution program. This requires the receiver to obtain additional information that the low-resolution stream corresponds to the plain-resolution stream. This additional information is out of the scope of the MPEG standards.

Another solution is to put the low-resolution video within the same TS and PMT structure as the plain-resolution stream. This makes the synchronization very easy between all components. However, to enable a picture-in-picture service with a main stream and a low resolution stream, the receiver needs to connect to the entire TS comprising the main and low resolution streams, which is then ineffective. In addition, if the main stream is protected by an error correction mechanism, such as Forward Error Correction or Retransmission, the low-resolution video component is also protected. Error correction on the low-resolution video brings an additional delay at the receiver that cannot be removed.

### SUMMARY OF THE INVENTION

The present invention attempts to remedy at least some of the concerns connected with the reception of multiple related streams in the prior art, by providing a signaling method.

The present invention concerns a receiver, able to receive the signaling having the advantage of simplifying the management of the multiple streams at the receiver.

To this end, the invention relates to an Audio-video decoder comprising a program selector for selecting a program; and a Program Map Table analyzer for, on reception of a Program Map Table corresponding to a first Transport Stream comprising information on a first program being carried in the first Transport Stream and a pointer to a second program being carried in a second Transport Stream, configuring the program selector so that it connects to the first Transport Stream and to the second Transport Stream for receiving the first program and the second program.

According to an embodiment, the pointer is a pointer to an Elementary Stream of the second program.

Another object of the invention is a method at an audio-video decoder (4) for receiving an audio-video program, comprising the steps of receiving a Program Map Table corresponding to a first Transport Stream comprising information on a first program being carried in the first Transport Stream and a pointer to a second program being carried in a second Transport Stream connecting to the first Transport Stream and to the second Transport Stream and receiving the first program and the second program.

Another object of the invention is a transport stream packet comprising a Program Map Table corresponding to a first Transport Stream comprising information on a first program being carried in the first Transport Stream and a pointer to a second program being carried in a second Transport Stream.

Another object of the invention is a computer program product comprising program code instructions for executing the steps of the method according to the invention, when that program is executed on a computer. By "computer program product", it is meant a computer program support, which may consist not only in a storing space containing the program, such as a computer memory, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is block diagram illustrating the signaling method of the embodiment;
- Figure 2 is a block diagram of a receiver according to the embodiment;
- Figure 3 shows a PMT and a PAT according to a first example of the embodiment;
- Figure 4 shows a PMT and a PAT according to a second example of the embodiment; and
- Figure 5 is a flow chart of a method according to the embodiment.

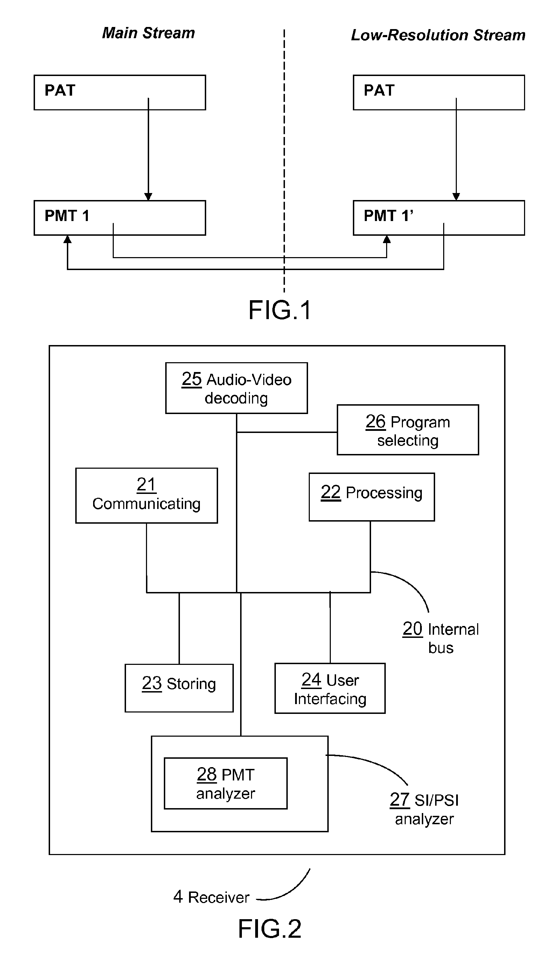

In Figure 2, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The signaling system according to the embodiment is based on the system as specified in ISO IEC 13818-1 and EN 300 468 "Digital Video Broadcasting (DVB); Specification for Service Information (SI) in DVB systems, DVB Document A038r5, April 2009" standards, noted EN 300 468 hereinafter.

In the various embodiments described hereinafter, information is added in the PMT tables. Figure 1 summarizes a cross linkage according to the embodiments between the main Transport Stream (TS) and the low-resolution Transport Stream. Within each TS, the PAT comprises a pointer to the PMT. Within the PMT of the main stream, there is a pointer to the program of the low-resolution TS. The other way round, within the PMT of the low-resolution stream, there is a pointer to the program of the main stream.

In other words, in addition to information on the current program, the PMT of the embodiment comprises information on another program comprised in a different Transport Stream. This is a pointer to a PMT of the other Transport Stream.

The various embodiments use the tools described herein to provide information in the PMT to the other program. These tools are intending to enable cross linkage signaling between the Transport Streams.

A first tool is the component tag. The component tag is included in the Stream Identifier descriptor that is part of the PMT. The Stream Identifier descriptor is defined in EN 300 468, chapter 6.2.39. In the embodiment, the component tag links together components that carry the same content, such as the plain resolution video and the low resolution video.

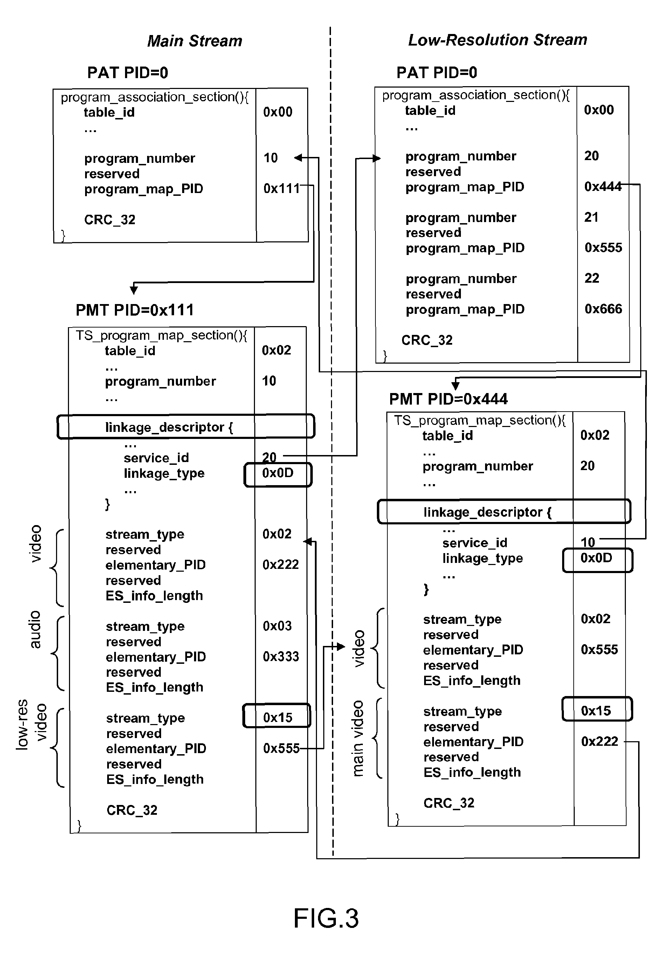

The PMT according to the embodiment advertises components comprised in the current TS and external to the current TS. This is illustrated in figure 3, where the PMT with PID 0x111 comprises a video component that is part of the stream advertised by that PMT. That PMT also comprises a low-resolution video component that is external to that stream. The PMT could advertise the PID value of the external component. However, some multiplexer devices remove an Elementary Stream descriptor within a PMT when the PID is not present in the stream. In the embodiment, the external component of the PMT is set to the 0x1 FFF value. Using the 0x1 FFF value permits to prevent the multiplexer device to remove that component. The component tag then permits to match the low resolution video component to the video component.

Alternatively, the component tag value is included in the private data bytes of the linkage descriptor as indicated hereinafter as the second tool. It indicates the component tag value of the other component. Alternatively, the component tag value is included in the associated_component_descriptor as indicated hereinafter as the fourth tool to link within the PMT components.

The component_tag is used to match the component of a stream with other information in other tables, typically the Event Information Table defined in EN 300 468, chapter 5.2.4. Here this component tag is used to match Elementary Streams, noted ES, from two PMTs: the current ES in one PMT and the remote ES in the other PMT.

A second tool is the Linkage descriptor. It is defined in EN 300 468, chapter 6.2.19. It advertises the link between several programs from different PMTs, and possibly from different TS.

According to the embodiment, the Linkage Descriptor is allowed in the PMT. It is inserted in the PMT at the program loop level or at the ES loop level. In the latter case, it is possible to insert the component tag of the targeted ES in the private data field to allow accurate component identification within the external PMT.

The Linkage Descriptor principally comprises a DVB triplet (transport_stream_id, original_network_id and service_id) and the linkage_type. The DVB triplet carries the value of the other TS belonging to the same logical program. The service_id is the program_number of the PMT.

A new value is defined to advertise that this linkage is for components that are not within the same TS but belong to the same logical program. In the fast channel switching context, the values "0x0Ds Service containing streams synchronized with the current service", or "0x0D Fast Channel Change tune-in streams", are used to define a specific type. When this new value is used, the Linkage descriptor is inserted in the PMT at the ES loop level. The private data bytes part of the descriptor can carry the component tag value of the component in the other TS. This component tag in the private data bytes of the linkage descriptor is then equal to the component tag of the stream identifier descriptor of the service in the other TS.

A third tool is the stream_type. The stream type specifies the type of program element carried within the packets with the PID whose value is specified by the elementary_PID. The values of the stream_type are defined in Table 2-29 of ISO IEC 13818-1.

The stream type of the embodiment advertises that the exposed component is external. The stream type can be extended in order to advertise that the component listed in the ES loop of the PMT table is available in another TS. In this case, the external PID is not the PMT of the other TS but directly the other component PID.

The stream_type is extended through various forms as described here.
- One bit is reserved in the stream_type structure (8 bits) to advertise that it is external, for example the first bit. 0x02 means MPEG1/2 video while 0x82 means external MPEG1/2 video. This solution is not very convenient since it reserves half of the stream_type space for this system.
- In a first alternative, a new stream_type is defined to explicitly indicate that it is an external component dedicated to fast channel switching. For example: "0x15 External component for fast channel change".
- In a second alternative, a new stream_type is defined to indicate that it is an external component, e.g. "0x15 External component for this service". Then a new descriptor is needed to provide more information on the usage of this external component. The following table shows such a new descriptor that carries additional information.

| **Syntax** | **Number of bits** | **Identifier** |
|---|---|---|
| external_type_descriptor(){ | | |
| descriptor_tag | 8 | uimsbf |
| descriptor_length | 8 | uimsbf |
| **usage** | 8 | uimsbf |
| } | | |

Here, the usage field is a 8 bit value that defines the usage of the component. For example, 0x00 is the "Main video for the service" and 0x01 is the "Low-resolution video for fast channel change". Other values can be defined for other applications using separate components over multiple TS within one logical program. This can be used when the stream type only reflects that this component is external.
- In a third alternative, the standard stream_type is used but the Linkage descriptor is relied on to tell that this component is a remote one.
- In a fourth alternative, the standard stream_type is used, and a "flag" descriptor is defined (i.e. a descriptor without data inside) to tell that this component is remote. For example, this descriptor can be called external_component_flag_descriptor.
- In a fifth alternative, the standard stream_type is used, with the new descriptor as defined in the second alternative.

A fourth tool is a descriptor to perform PMT internal component tag matching. It is called the associated_component_descriptor, and carries the component tag of the other ES in the same PMT to which this ES is linked. This new descriptor is used to match the ES that represents the same content, internally to one PMT. In the fast channel switching case, there is one ES that is the main video of the service, and one ES that is the low resolution video for which the real data is carried within another TS.

The table below shows syntax for the associated_component_descriptor:

| **Syntax** | | **Number of bits** | **Identifier** |
|---|---|---|---|
| associated_component_descriptor(){ | | | |
| | descriptor_tag | 8 | uimsbf |
| | descriptor_length | 8 | uimsbf |
| | **associated_component_tag** | 8 | uimsbf |
| } | | | |

The associated_component_tag is the internal link between components of the same PMT. In the fast channel switching, it is the component tag of the ES in this same PMT that is representing the same content as the external component currently being described.

The tools and the technical possibilities to use them are summarized herein:
1. Link between PMTs:
   a. Done out-of-band, i.e. no tool is required within the Service Information / Program Specific Information (SI/PSI) metadata.
   b. Use the linkage descriptor to signal that this PMT is linked with another one for this service.
2. Link between the component descriptions in multiple PMT for the same component (one remote and one current):
   a. Use the same PID in both descriptions.
   b. Use the stream identifier descriptor and its component tag, and use the same component tag value in each PMT.
   c. Use the stream identifier descriptor and its component tag, and define a specific pointer to the component tag of the other PMT (the linkage descriptor private data).
3. Link between different components of the same PMT that represent the same content but differently encoded:
   a. Do nothing, i.e. assume that it is obvious (e.g. only one video component actual and remote, so they surely match).
   b. Use the stream identifier descriptor and its component tag, and use the same component tag value for those components inside the same PMT.
   c. Use the stream identifier descriptor and its component tag, and define a specific pointer to the other component tag within the same PMT (the associated component descriptor).
4. Identification that this component is a remote component:
   a. Use a bit of the stream type as a flag.
   b. Define a new stream type that explicitly says the purpose of the remote component (e.g. low resolution stream for fast channel change).
   c. Define a new stream type that just says that the component is remote, and define a new descriptor to say explicitly why.
   d. Use the standard stream type, and define a "flag" descriptor (i.e. empty descriptor) that says that this component is remote.
   e. Use the standard stream type, and define a new descriptor that says that it is remote and says explicitly why.
   f. Use the standard stream type, and use the linkage descriptor at the component level to say that the component is remote (and it is also possible to say explicitly why in the linkage descriptor).
5. PID value for remote component:
   a. Real PID value of the remote component in its own PMT and TS.
   b. Default value (0x1FFF) to survive PID renaming techniques.

Various embodiments correspond to various combinations of these tools.

A first example of using the tools is illustrated in figure 3. It shows the following combination: 1 b-2a-3a-4b-5a. This corresponds to:
- no component tag,
- the Linkage descriptor with the new value 0x0D at the program loop level,
- and a new stream_type value 0x15 without specific descriptor,
- No Associated Component descriptor,
- with correct PID values (not 0x1 FFF)

This is a simple solution, not compliant with PID renaming. PID renaming is done when a device such as a multiplexer receives MPEG2-TS from several different sources, and changes all PIDs in those TS before outputting the multiplexed TS. PIDs are changed to avoid conflicts of sources having the same PIDs. This solution supposes that the identification of several MPEG2-TS carriage (frequency, multicast address ...) is done out-of-band from the SI/PSI mechanism. It is adapted for example when the main stream is IPTV, the low-resolution streams are sent on Digital Terrestrial Television. So there are several low-resolution streams within the Digital Terrestrial Television MPEG2-TS, and each one has to know to which main stream it is linked to, as well as the main stream has to know to which PMT inside the Digital Terrestrial Television TS it is linked to.

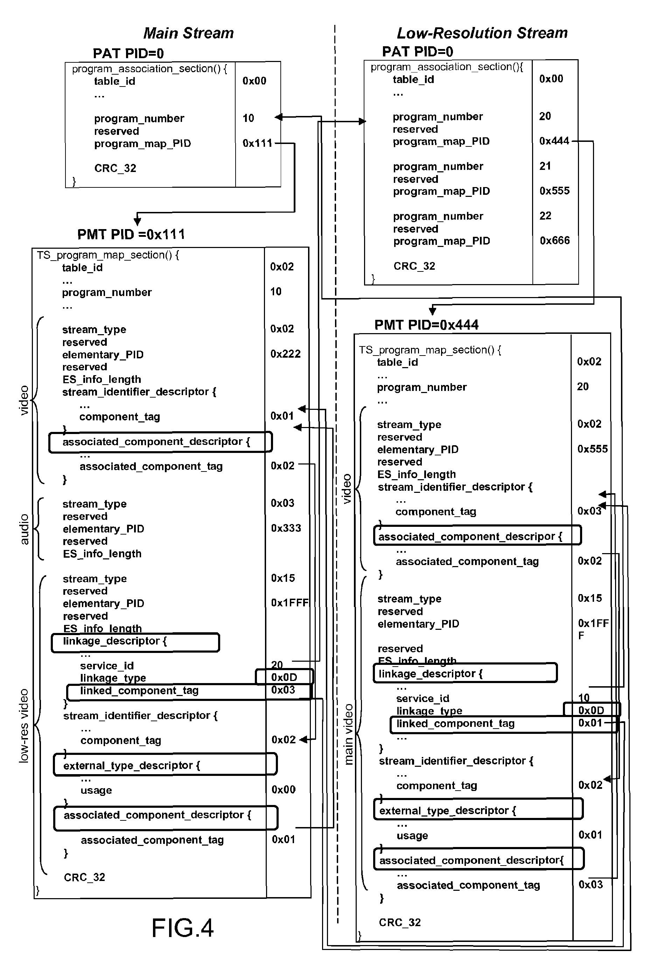

A second example of using the tools is illustrated in figure 4. It shows the following combination 1 b-2c-3c-4c-5b. This corresponds to:
- the component tag is used with its pointer in the linkage descriptor,
- the Linkage descriptor with the new value 0x0D at the ES loop level (i.e. one Linkage descriptor for each component that has an equivalent in the other TS),
- the new stream_type but with new external type descriptor,
- the associated component descriptor to describe the internal link,
- default PID value of 0x1 FFF.

This second example can be used to link altogether at a logical level more than two TS, since each TS is defined, with its program number, and for each program the precise component linked with the precise component in the other TS.

A decoder according to the embodiment is now described, as illustrated in figure 2. The decoder is compliant with the ISO IEC 13818-1 and EN 300 468 standards. As such, the decoder 4 comprises communicating module 21 for receiving audio-video content. It also comprises processing module 22, such as a processor, an audio video decoder 25, a program selection module 26, and a storing module 23 such as a memory. The decoder of the embodiment comprises a SI/PSI analyzer 27 adapted to analyze SI/PSI information received. The SI/PSI analyzer comprises a PMT Analyzer 28 adapted to analyze the PMT.

In particular, the PMT Analyzer 28 is adapted to interpret the PMT as defined in the embodiments. The PMT Analyzer interprets the cross linkage signaling indicating in such a PMT.

The PMT analyzer is adapted, on reception of a PMT linking a first program to a second program, to configure the program selecting module 26 that is adapted to select the first program and the second program. The the first program and the second program are then recognized as being related to each other.

More particularly the PMT analyzer is adapted to interpret the various PMT descriptors as defined hereinabove.

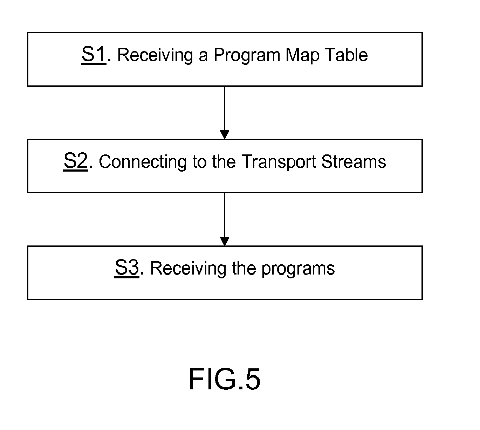

The method according to the embodiment is illustrated in figure 5. The method comprises a step S1 of receiving a PMT according to the embodiment. Then the decoder connects S2 to the respective Transport Streams. And, the decoder receives S3 the programs as indicated in the PMT.

According to a further embodiment, the decoder comprises a Switching module. On reception of a PMT linking a low resolution video of a first TS to a main video stream of a second TS, the PMT Analyzer configures the Program selecting module and the Switching module so that the Switching module performs channel switching with the low resolution video and the main stream. The Switching module performs channel switching with a method as defined in W02005112465A1.

The embodiments have been based on programs from two different Transport Streams. Of course the PMT could advertize more than two programs from more than two Transport Streams.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Audio-video decoder (4) comprising:
- a program selector (26) for selecting a program; and
- a Program Map Table analyzer (28) for, on reception of a Program Map Table corresponding to a first Transport Stream comprising information on a first program being carried in said first Transport Stream and a pointer to a second program being carried in a second Transport Stream, configuring the program selector so that it connects to the first Transport Stream and to the second Transport Stream for receiving said first program and said second program.

2. Audio-video decoder (4) according to claim 1, said pointer being a pointer to an Elementary Stream of the second program.

3. Method at an audio-video decoder (4) for receiving an audio-video program, comprising the steps of:
- receiving (S1) a Program Map Table corresponding to a first Transport Stream comprising information on a first program being carried in said first Transport Stream and a pointer to a second program being carried in a second Transport Stream;
- connecting (S2) to the first Transport Stream and to the second Transport Stream; and
- receiving (S3) said first program and said second program.

4. Transport stream packet comprising a Program Map Table corresponding to a first Transport Stream comprising information on a first program being carried in said first Transport Stream and a pointer to a second program being carried in a second Transport Stream.

5. Computer program product, **characterized in that** it comprises program code instructions for executing the steps of the method according to claim 3 when said program is executed on a computer.
